Europäisches Patentamt

European Patent Office

Office européen des brevets

(11) Publication number: **0 101 104**
**B1**

## (12) EUROPEAN PATENT SPECIFICATION

(45) Date of publication of patent specification: **28.05.86**

(21) Application number: **83200991.4**

(22) Date of filing: **04.07.83**

(51) Int. Cl.⁴: **A 23 D 3/02**

(54) **A process and an apparatus for producing edible emulsions.**

| | |
|---|---|
| (30) Priority: **08.07.82 GB 8219844**<br>**18.10.82 NL 8204011** | (73) Proprietor: **UNILEVER NV**<br>**Burgemeester s'Jacobplein 1 P.O. Box 760**<br>**NL-3000 DK Rotterdam (NL)**<br>㉞ **BE CH DE FR IT LI NL SE AT** |
| (43) Date of publication of application:<br>**22.02.84 Bulletin 84/08** | (73) Proprietor: **UNILEVER PLC**<br>**Unilever House Blackfriars P.O. Box 68**<br>**London EC4P 4BQ (GB)**<br>㉞ **GB** |
| (45) Publication of the grant of the patent:<br>**28.05.86 Bulletin 86/22** | |
| (84) Designated Contracting States:<br>**AT BE CH DE FR GB IT LI NL SE** | (72) Inventor: **Moran, David Patrick Joseph**<br>**Jubilee Lodge Keyston Road**<br>**Covington Huntingdon (GB)** |
| (56) References cited:<br>**DE-B-1 129 814**<br>**NL-A- 283 897**<br>**US-A-3 494 275** | (74) Representative: **Léon, Alain Elie, Dr. et al**<br>**Unilever N.V. Patent Division P.O. Box 137**<br>**NL-3130 AC Vlaardingen (NL)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an apparatus and a process for producing edible emulsions, particularly oil-and water containing emulsions such as spreads of the margarine-type or of low-calorie-type.

Such products are conventionally produced from an aqueous phase and a fat phase which are combined to form a pre-emulsion which is subjected to cooling and texturising treatments in order to obtain a plastic product such as a stick margarine or tub margarine. The plastic fat product is automatically packed by a packaging machine. Quite often the packaging machine breaks down or has to be stopped for some reason or another. In that case the product is normally remelted and recirculated or it has to be dumped (for example, US—A—3494275). These procedures clearly have disadvantages, since as a result of this sometimes large quantities of the product can be lost or, in the case where emulsions of the duplux type, i.e. emulsions of the o/w/o-type are produced, starting from a cream containing fat proteins and thickeners, the character of the emulsion is strongly affected owing to changes occurring in the sensitive structures (e.g. particle size of the dispersed phase) and phase inversion may occur, resulting in emulsions of a different type than originally intended (o.w instead of w/o emulsions). Loss of oil from the dispersed cream may also occur. Also a problem may arise due to the various amounts of recirculated product (10—100%) encountered in standard margarine processing.

Applicants have found a process and an apparatus which alleviate the above-mentioned problems to a great extent.

The process according to the invention for producing water- and oil-containing edible emulsions comprises
(i) processing individual streams of components of the emulsion;
(ii) separately recirculating at least part of each of the components of the emulsion;
(iii) mixing the processed components of the emulsion to obtaim the final emulsion.

The individual streams of components of the emulsion may comprise an aqueous phase or fat phase or an oil- and water-containing emulsion, preferably an oil-in-water emulsion (cream).

At least one of the individual streams of components consisting of e.g. an aqueous phase is processed through one or more heat exchangers, wherein pasteurisation takes place or cooling is effected to achieve a temperature somewhat higher, equal to or lower than the temperature at which the fat used for producing the emulsion starts crystalling. Cooling is preferably carried out to achieve a temperature within the range of −10° to 15°C.

One or more aqueous phases may contain a viscosity increasing agent, such as gelling agent, a thickening agent or a protein, whereas another aqueous phase may be non-gellable.

At least one of the individual streams of components consisting of a fat phase is processed through a heat exchanger and/or a fat conditioning system in which fat crystal nucleation and fat crystal growth occur. One of the individual streams of components may consist of a water- and oil-containing emulsion which is processed through a heat exchanger (in which inversion may take place).

According to a preferred embodiment of the present invention
(i) an individual component stream sonsisting of an oil-in-water emulsion and an individual component stream consisting of a fat phase are separately processed;
(ii) at least part of the oil-in-water emulsion and at least part of the fat phase are recirculated;
(iii) said processed oil-in-water emulsion and fat phase are mixed to obtain an oil-in-water emulsion.

For instance, in case of breakdown of the packaging machine, the individual streams of emulsion components consisting of the fatty phase(s) and the aqueous phase(s) of the emulsion are separately recirculated, preferably via heat-exchangers, to their respective containers, from which they can be reintroduced into the system, preferably via a common proportioning pump.

The individual recirculating streams are usually constantly in operation at a low rate of recirculation to keep the mechanism at the ready.

The present invention also relates to an apparatus which is useful for producing edible multiple-phase emulsions, particularly oil- amd water-containing emulsions of the margarine or low-fat-spread type.

The apparatus in its simplest form comprises: means (A) for processing individual streams of components of the emulsion; means (B) for separately recirculating each of the components of the emulsion; means (C) for mixing the processed individual streams of components of the emulsion.

Means (A) may consist of one or more heat-exchangers and/or one or more fat conditioning systems in which fat crystal nucleation and growth occur. Means (A) preferably consists of one or more scraped-surface heat-exchangers and/or one or more crystallizer units, e.g. Votator A- and C-units as described in "Margarine" by Andersen and Williams, Pergamon Press, 1965.

Means (B) may comprise valves directing the individual streams through either a recirculation loop (which may comprise a heat-exchanger) to separate containers or to means (C), which may comprise a static mixer, a scraped surface heat-exchanger, a crystallizer unit, a homogenizing valve, optionally driven by a high-pressure hydraulic pump, or combinations thereof. Means (B) preferably consist in ganged valves.

Means (C) are preferably connected to a sensory unit, for instance an electric conductivity meter, enabling checking of the quality of the emulsion produced, and to a valve directing said emulsion to either the packaging machine or to dump.

The mixing unit (C) is most conveniently a low-capacity mixer (0.5 to 20 litres), so that in the case of material having to be dumped the loss of material is minimized.

The advantages of the process and apparatus according to the invention can be summarized as follows:

(1) By having provision to recirculate the oil phase(s) and the aqueous phase(s) as individual separate stream(s) followed by a volumetrically relatively small mixing device, loss of material due to overworking in a standard Votator on holdup is eliminated or at least greatly restricted.

(2) Possible problems caused by varying amounts of recirculated (reworked) product (10—100%), encountered in standard processing, are eliminated since in the present invention, instead of the product itself, individual streams of product-components are recirculated.

(3) Products with delicate structures (e.g. thixotropic aqueous phases) can be handled.

(4) Products produced from multiple, differently formulated aqueous phases which should not be intermixed can be processed.

The invention will now be illustrated in the following examples and drawings.

Example 1

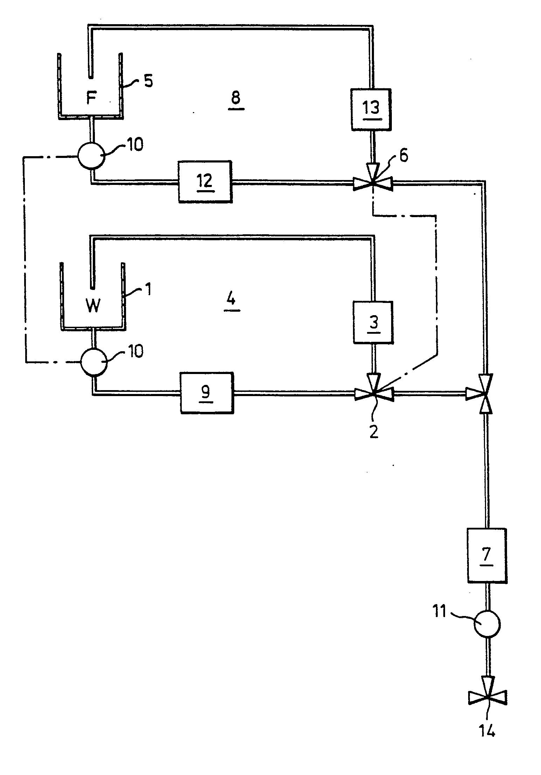

In this example an apparatus according to the invention is illustrated. The numerals refer to the figures appearing in the appended drawing.

The apparatus comprises in its simplest form:
(A) a container (1), from which e.g. an aqueous phase (w) can be dispensed, a valve (2) directing the flow of aqueous phase to a 5 l mixing unit (7) or through a recirculation loop (4) leading to the container (1);
(B) a container (5), from which e.g. a fat phase can be dispensed, a valve (6) directing the flow of fat phase to a mixing unit (7) or to a recirculation loop (8) leading to fat phase container (5).

In a more sophisticated apparatus, which is appropriate for producing spreads, container (1) and container (5) are preferably connected to a common proportioning pump (10).

The aqueous phase is processed through heat-exchanger(s) (9), whereas the fat phase is processed through a series of Votator A- and C-units (12), wherein the fat is precrystallised.

Valves (2) and (6) are ganged valves. Recirculating loops (4) and (8) comprise heat-exchangers (3) and (13) respectively.

Mixing device (7) is connected to an electric conductivity meter (11). Through valve (14) the emulsion is directed to either a packaging machine or to dump.

Example 2

In this example the production of the o/w/o-emulsion using the process according to the invention is illustrated.

Using the apparatus illustrated in Example 1, an o/w/o-emulsion was produced from a cream (i) containing: 11.0% of fat, 0.08% of K-sorbate, 2.43% of whey protein, 1.0% of carboxymethylcellulose and 56.49% of water, pH 5.2.; and a fat phase (ii), containing 28.37% of fat, 0.6% of monoglyceride and 0.03% of colouring agent.

The fat phase (ii) was cooled to 0°C and the cream phase (i) to 5°C before final mixing in a Votator C-unit rotating at 1000 rpm.

Individual streams of the components of the emulsion were constantly recirculated at a low rate.

The emulsion obtained was of the o/w/o-type, having cream drops of an average diameter of about 8 microns, dispersed in a continuous fat phase. Very little or no loss of oil from the dispersed phase had occurred.

The electric conductivity was about 0.2 micro S cm$^{-1}$.

**Claims**

1. A process for producing an edible oil- and water-containing emulsion, for which comprises:
(i) Processing individual streams of components of the emulsion;
(ii) separately recirculating at least part of each of the components of the emulsion;
(iii) mixing the processed components of the emulsion to obtain the final emulsion.

2. A process according to claim 1, wherein at least one of the individual streams of components of the emulsion consists of an aqueous phase.

3. A process according to claim 1, wherein at least one of the individual streams of components of the emulsion consists of a fat phase.

4. A process according to claim 1, wherein at least one of the individual streams of components of the emulsion consists of an oil- and water-containing emulsion.

5. A process according to claim 4, wherein the oil-and water-containing emulsion is an oil-in water emulsion.

6. A process according to claim 1, wherein at least one of the individual streams of components consisting of an aqueous phase is processed through one or more heat-exchangers.

7. A process according to claim 6, wherein the aqueous phase is pasteurized.

8. A process according to claim 6, wherein the aqueous phase is processed through a heat-exchanger, in which it is cooled to a temperature somewhat higher than, equal to or lower than the temperature at which the fat used for producing the emulsion starts crystallizing.

9. A process according to claim 1, wherein at least one of the individual streams of components consisting of a fat phase is processed through a heat-exchanger and/or a fat conditioning system in which fat crystal nucleation and growth occur.

10. A process according to claim 1, wherein at least one of the individual streams of components of the emulsion consisting of an oil-in-water emulsion is processed through a heat exchanger.

11. A process according to claim 1, wherein at least one of the individual streams of components of the emulsion consists of an aqueous phase containing an additive which increases its viscosity.

12. A process according to claim 11, wherein the additive is selected from a protein, a gelling agent and a thickening agent.

13. A process according to claim 1, wherein

(i) an individual component stream consisting of an oil-in-water emulsion and an individual component stream consisting of a fat phase are separately processed;

(ii) at least part of the oil-in-water emulsion and at least part of the fat phase are recirculated;

(iii) said processed oil-in-water emulsion and fat phase are mixed to obtain an oil-in-water emulsion.

14. Apparatus for producing an edible oil- and water-containing emulsion, comprising:

means (A) for processing individual streams of components of the emulsion;

means (B) for separately recirculating each of the components of the emulsion.

means (C) for mixing the processed individual streams of components of the emulsion.

15. Apparatus according to claim 14, wherein means (A) consist of one or more heat-exchangers and/or one or more fat conditioning systems in which fat crystal nucleation and growth occur.

16. Apparatus according to claim 15, wherein means (A) consist of one or more scraped-surface heat-exchangers and/or one or more crystallizer units.

17. Apparatus according to claim 14, wherein means (B) consist of valves directing the individual streams through either a recirculation loop to separate containers or to means (C).

18. Apparatus according to claim 14, wherein means (C) comprises a static mixer, a scraped-surface heat-exchanger, a crystallizer unit, a homogenising valve optionally driven by a high-pressure hydraulic pump, or combinations thereof.

19. Apparatus according to claim 14, wherein the containers are connected to a common proportioning pump.

20. Apparatus according to claim 14, wherein means (B) consist of ganged valves.

21. Apparatus according to claim 14, wherein means (C) are connected to a sensory unit enabling checking of the quality of the emulsion produced.

22. Apparatus according to claim 21, wherein the sensory unit consists of an electric conductivity meter.

23. Apparatus according to claim 14, wherein means (C) consist of a low-capacity mixer having a volume ranging from 0.5 to 20 liters.

24. Apparatus according to claim 14, wherein means (C) are connected to a valve directing the product to either the packaging machine or to dump.

25. Apparatus according to claim 14, wherein means (B) comprise a heat-exchanger.

**Patentansprüche**

1. Verfahren zur Herstellung einer eßbaren öl- and wasserhaltigen-Emulsion, gekennzeichnet durch

(I) die Behandlung von einzelnen Strömen von Bestandteilen der Emulsion;

(II) das gesonderte Rückführen mindestens eines Teils eines jeden Bestandteils der Emulsion;

(III) das Mischen der behandelten Bestandteile der Emulsion, um die fertige Emulsion zu erhalten.

2. Verfahren nach Abspruch 1, dadurch gekennzeichnet, daß mindestens einer der einzelnen Ströme der Bestandteile der Emulsion aus einer wässrigen Phase besteht.

3. Verfahren nach Anspruch 1, dadurch gekennzeichnet, daß mindestens einer der einzelnen Ströme der Bestandteile der Emulsion aus einer Fettphase besteht.

4. Verfahren nach Anspruch 1, dadurch gekennzeichnet, daß mindestens einer der einzelnen Ströme der Bestandteile der Emulsion aus einer öl- und wasserhaltigen Emulsion besteht.

5. Verfahren nach Anspruch 4, dadurch gekennzeichnet, daß die öl- und wasserhaltige Emulsion eine Öl-in Wasser-Emulsion ist.

6. Verfahren nach Anspruch 1, dadurch gekennzeichnet, daß mindestens einer der einzelnen Ströme der Bestandteile, der aus einer wässrigen Phase besteht, mit einem oder mehreren Wärmeaustauschern behandelt wird.

7. Verfahren nach Anspruch 6, dadurch gekennzeichnet, daß die wässrige Phase pasteurisiert wird.

8. Verfahren nach Anspruch 6, dadurch gekennzeichnet, daß die wässrige Phase mittels eines Wärmeaustauschers behandelt wird, indem sie auf eine Temperatur von etwas höher als, gleich wie oder niedriger als die Temperatur gekühlt wird, bei der das bei der Herstellung der Emulsion verwendete Fett zu kristallisieren beginnt.

9. Verfahren nach Anspruch 1, dadurch gekennzeichnet, daß mindestens einer der einzelnen Ströme der Bestandteile, der aus einer Fettphase besteht, mittel eines Wärmeaustauschers und/oder mittels eines Fettkonditioniersystems, in dem die Kristallkeimbildung und das Kristallwachstum des Fetts auftritt, behandelt wird.

10. Verfahren nach Anspruch 1, dadurch gekennzeichnet, daß mindestens einer der einzelnen Ströme der Bestandteile der Emulsion, die aus einer Öl-in-Wasser-Emulsion besteht, mittels eines Wärmeaustauschers behandelt wird.

11. Verfahren nach Anspruch 1, dadurch gekennzeichnet, daß mindestens einer der einzelnen Ströme der Bestandteile der Emulsion aus einer wässrigen Phase besteht, die ein die Viskosität anhebendes Additiv enthält.

12. Verfahren nach Anspruch 11, dadurch gekennzeichnet, daß das Additiv unter einem Protein, einem Gelierungsmittel und einem Verdikkungsmittel ausgewählt wird.

13. Verfahren nach Anspruch 1, dadurch gekennzeichnet, daß

(I) ein einzelner Bestandteilstrom, der aus einer Öl-in-Wasser-Emulsion besteht, und ein einzelner Bestandteilstrom, der aus einer Fettphase besteht, separat behandelt werden;

(II) mindestens ein Teil der Öl-in-Wasser-Emulsion und mindestens ein Teil der Fettphase rückgeführt werden;

(III) die behandelte Öl-in-Wasser-Emulsion und die Fettphase gemischt werden, um eine Öl-in-Wasser-in-Öl-Emulsion zu erhalten.

14. Vorrichtung zur Herstellung einer eßbaren öl- und wasserhaltigen Emulsion, gekennzeichnet durch

Mittel (A) zur Behandlung einzelner Ströme von Bestandteilen der Emulsion;

Mittel (B) zum separaten Rückführen jeden Bestanteils der Emulsion;

Mittel (C) zum Mischen der behandelten einzelnen Ströme der Bestandteile der Emulsion.

15. Vorrichtung nach Anspruch 14, dadurch gekennzeichnet, daß die Mittel (A) aus ein oder mehren Wärmeaustauschern und/oder einem oder mehren Fettkonditioniersystemen, in denen die Keimbildung und das Keimwachsen der Fettkristalle auftreten, bestehen.

16. Vorrichtung nach Anspruch 15, dadurch gekennzeichnet, daß die Mittel (A) aus ein oder mehreren Dünnschichtwarmeaustauschern und/oder einem oder mehreren Kristallistoreinheiten bestehen.

17. Vorrichtung nach Anspruch 14, dadurch gekennzeichnet, daß die Mittel (B) aus Ventilen bestehen, die die einzelnen Ströme durch entweder ein Rückführungssystem zu gesonderten Behältern oder zu den Mitteln (C) lenken.

18. Vorrichtung nach Anspruch 14, gekennzeichnet durch Mittel (C), die einen statischen Mischer, einer Dünnschichtwavrmeaustauscher, eine Kristallisatoreinheit, ein Homogenisierventil, gegebenenfalls durch eine Hochdruckhydropumpe angetrieben, oder Kombinationen davon aufweisen.

19. Vorrichtung nach Anspruch 13, dadurch gekennzeichnet, daß die Behälter mit einer normalen Dosierpumpe verbunden sind.

20. Vorrichtung nach Anspruch 14, gekennzeichnet durch Mittel (B), die aus mechanisch gekuppelten Ventilen bestehen.

21. Vorrichtung nach Anspruch 14, dadurch gekennzeichnet, daß die Mittel (C) mit einer die Qualitätsprüfung der hergestellen Emulsion ermöglichenden sensorischen Einheit verbunden sind.

22. Vorrichtung nach Anspruch 21, dadurch gekennzeichnet, daß die sensorische Einheit aus einem Gerät zum Messen der electrischen Leitfähigkeit besteht.

23. Vorrichtung nach Anspruch 14, dadurch gekennzeichnet, daß die Mittel (C) aus einem unterdimensionierten Mischer eines Volumens von 0,5 bis 20 Litern bestehen.

24. Verfahren nach Anspruch 14, dadurch gekennzeichnet, daß die Mittel (C) mit einem Ventil verbunden sind, das das Produkt entweder zu der Verpackmaschine oder zu einer Zwischenlagerung lenkt.

25. Vorrichtung nach Anspruch 14, dadurch gekennzeichnet, daß die Mittel (B) einen Wärmeaustauscher aufweisen.

**Revendications**

1. Procédé de production d'une émulsion comestible contenant de l'huile et de l'eau, qui comprend les étapes consistant

(i) à traiter des courants individuels de composants de l'émulsion;

(ii) à remettre séparément en circulation une partie au moins de chacun des composants de l'émulsions;

(iii) à mélanger les composant traités de l'émulsion pour obtenir l'émulsion finale.

2. Procédé selon la revendication 1, dans lequel au moins l'un des courants individuels de composants de l'émulsion consiste en une phase aqueuse.

3. Procédé selon la revendication 1, dans lequel au moins l'un des courants individuels de composants de l'émulsion consiste en une phase grasse.

4. Procédé selon la revendication 1, dans lequel au moins l'un des courants individuels de composant de l'émulsion consiste en une émulsion contenant de l'huile et de l'eau.

5. Procédé selon la revendication 4, dans lequel l'émulsion contenant de l'huile et de l'eau est une émulsion huile-dans-eau.

6. Procédé selon la revendication 1, dans lequel on traite au moins l'un des courants individuels de composants consistant en une phase aqueuse par passage à travers un ou plusieurs échangeurs de chaleur.

7. Procédé selon la revendication 6, dans lequel on pasteurise la phase aqueuse.

8. Procédé selon la revendication 6, dans lequel on traite la phase aqueuse par passage à travers un échangeur de chaleur, dans lequel elle est refroidie à une température un peu supérieure, égale ou inférieure à la température à laquelle la graisse servant à produire l'émulsion commence à se cristalliser.

9. Procédé selon la revendication 1, dans lequel on traite au moins l'un des courants individuels de composants consistant en une phase grasse par passage à travers un échangeur et/ou un système de conditionnement de la graisse dans lequel ont lieu la nucléation cristalline de la graisse et sa croissance.

10. Procédé selon la revendication 1, dans lequel au moins l'un des courants individuels de composants de l'émulsion consistant en une émulsion huile-dans-eau est traité par passage dans un échangeur de chaleur.

11. Procédé selon la revendication 1, dans lequel au moins l'une des courants individuels de composants de l'émulsion consiste en une phase aqueuse contenant un additif qui en augmente la viscosité.

12. Procédé selon la revendication 11, dans lequel l'additif est choisi parmi une protéine, un agent de gélification et un agent d'épaississement.

13. Procédé selon la revendication 1, dans lequel

(i) on trait séparément un courant de composant individuel consistant en une émulsion huile-dans-eau et un courant de composant individuel consistant en une phase grasse;

(ii) on remet en circulation une partie au moins de l'émulsion huile-dans-eau et une partie au moins de la phase grasse;

(iii) on mélange ladite émulsion huile-dans-eau et ladite phase grasse traitées pour obtenir une émulsion huile-dans-eau-dans-huile.

14. Appareil de production d'une émulsion comestible contenant de l'huile et de l'eau, comprenant des moyens (A) pour traiter des courants individuels de composants de "émulsion;

des moyens (B) pour remettre séparément en circulation chacun des composants de l'émulsion;

des moyens (C) pour mélanger les courants individuels traités des composants de l'émulsion.

15. Appareil selon la revendication 14, dans lequel les moyens (A) consistent en un ou plusieurs échangeurs de chaleur et un ou plusieurs systèmes de conditionnement des graisses dans lequels ont lieu la nucléation cristalline de la graisse et sa croissance.

16. Appareil selon la revendication 15, dans lequel les moyens (A) comprennent un ou plusieurs échanguers de chaleur à surface raclée et/ ou une ou plusieurs unités de cristallisation.

17. Appareil selon la revendication 14, dans lequel les moyens (B) sont des soupapes qui dirigent les courants individuels soit à travers une boucle de recirculation vers des récipients séparés ou vers les moyens (C).

18. Appareil selon la revendication 14, dans lequel les moyens (C) comprennent un mélangeur statique, un échanguer de chaleur à surface raclée, une unité de cristallisation, une soupape d'homogénéisation facultativement entraînée par une pompe hydraulique à haute pression ou des combinaisons de ceux-ci.

19. Appareil selon la revendication 14, dans lequel les récipients sont reliés à une pompe doseuse commune.

20. Appareil selon la revendication 14, dans lequel les moyens (B) sont constitués de soupapes jumelées.

21. Appareil selon la revendication 14, dans lequel les moyens (C) sont reliés à une unité détectrice permettant la vérification de la qualité de l'émulsion produite.

22. Appareil selon la revendication 21, dans lequel l'unité détectrice consiste en ce instrument de mesure de la conductivité électrique.

23. Appareil selon la revendication 14, dans lequel les moyens (C) sont un mélangeur de faible capacité dont le volume est compris rntre 0,5 et 20 litres.

24. Appareil selon la revendication 14, dans lequel les moyens (c) sont reliés à une soupape qui dirige le produit vers une machine d'emballage ou au rebut.

25. Appareil selon la revendication 14, dans lequel les moyens (B) comprennent un échangeur de chaleur.